# FASCICULE DE BREVET EUROPEEN

(11) **EP 0 718 147 B1**
(45) Date de publication et mention de la délivrance du brevet: **01.04.1998**
(21) Numéro de dépôt: 95402853.6
(22) Date de dépôt: 18.12.1995
(51) Int. Cl.: B60N 2/44

(54) **Armature d'assise pour sièges de véhicules**
Sitzrahmen für Fahrzeugsitze
Seat part frame for vehicle seats

(30) Priorité: 20.12.1994 FR 9415323
(43) Date de publication de la demande: 26.06.1996
(73) Titulaire: BERTRAND FAURE EQUIPEMENTS S.A., 92100 Boulogne (FR)
(72) Inventeur: Aufrere, Cristophe, F-91460 Marcoussis (FR)
(74) Mandataire: Burbaud, Eric

(56) Documents cités:
- EP-A- 0 104 853
- EP-A- 0 120 747
- EP-A- 0 363 261
- DE-A- 4 039 100
- DE-A- 4 303 006
- US-A- 2 720 914

## Description

La présente invention est relative aux armatures d'assise pour sièges de véhicules.

Parmi ces armatures d'assise, l'invention vise plus spécialement celles qui sont destinées à des sièges de véhicules présentant une assise et un dossier, ces armatures comportant un cadre en profilés à section tubulaire ou non, ce cadre incluant deux longerons latéraux s'étendant chacun entre une extrémité arrière et une extrémité avant, les extrémités arrière respectives des deux longerons latéraux étant destinées au montage du dossier du siège et les extrémités avant respectives de ces longerons étant reliées entre elles par une traverse frontale (voir par exemple EP-A-0 104 853).

Ces armatures d'assise dotées d'un cadre en profilés sont préférables à celles dont le cadre est réalisé en tôle pleine, car elles sont plus légères et moins coûteuses.

Mais ces armatures à cadre en profilés ont l'inconvénient de présenter une résistance mécanique limitée, notamment vis-à-vis des couples que peuvent exercer sur elles les dossiers de sièges.

En effet, le dossier d'un siège peut exercer sur l'armature d'assise de ce siège un couple important, en particulier en cas d'accident de circulation du véhicule.

Ce couple peut atteindre par exemple 200 m.daN en cas de choc arrière sur le véhicule, ou plus de 500 m.daN en cas de choc avant si le siège possède une ceinture de sécurité dite "embarquée", dont l'attache supérieure est fixée au dossier du siège.

La présente invention a notamment pour but d'améliorer la résistance mécanique des armatures d'assise à cadre en profilés, sans les renchérir notablement et sans les alourdir, voire en diminuant leur coût et/ou leur poids.

A cet effet, selon l'invention, une armature d'assise du genre en question est essentiellement caractérisée en ce que le cadre de l'armature comporte deux profilés rigides de dimensions voisines qui présentent une forme générale en U, avec une base disposée vers l'avant et deux branches latérales qui s'étendent vers l'arrière à partir de la base jusqu'à des extrémités arrière les bases respectives des deux profilés étant disposées sensiblement parallèlement l'une à l'autre pour former la traverse frontale du cadre et chaque longeron latéral étant formé par deux branches latérales appartenant respectivement aux deux profilés associées à une plaque de fixation rigide verticale, les extrémités arrière de ces deux branches latérales étant écartées l'une de l'autre verticalement et étant fixées à ladite plaque de fixation et les deux profilés étant fixés rigidement l'un à l'autre en deux points de fixation avant, situés respectivement au voisinage de chaque longeron latéral et vers l'avant du cadre.

Chaque longeron latéral possède ainsi une structure triangulée qui lui confère une résistance mécanique élevée notamment vis-à-vis des couples qui peuvent être exercés par le dossier du siège, et ce sans alourdir ou renchérir notablement l'armature d'assise.

Dans des modes de réalisation préférés, on a recours en outre à l'une et/ou à l'autre des dispositions suivantes:
- les deux profilés rigides sont fixés l'un à l'autre par soudure aux deux points de fixation avant, les extrémités arrière des deux profilés étant également fixées par soudure aux deux plaques de fixation, chaque longeron latéral comportant un pivot horizontal qui relie entre elles les deux branches latérales appartenant à ce longeron latéral, ce pivot étant disposé entre d'une part, le point de fixation avant situé au voisinage dudit longeron latéral et, d'autre part, les extrémités arrière desdites deux branches latérales, et les deux pivots correspondant aux deux longerons latéraux étant alignés selon un axe commun; ces dispositions permettent en particulier un montage aisé et fiable de l'armature d'assise, comme il sera expliqué ci-après;
- les deux branches latérales de l'un des deux profilés rigides, dit premier profilé, sont légèrement moins écartées l'une de l'autre que les deux branches latérales de l'autre des deux profilés rigides, dit deuxième profilé, les deux branches latérales du premier profilé s'étendant vers l'avant au-delà de la base du deuxième profilé, et les deux points de fixation avant étant constitués chacun par un point de contact entre une branche latérale du premier profilé et la base du deuxième profile ;
- les deux branches latérales le profilé qui appartiennent à un même longeron latéral se croisent verticalement au niveau du pivot qui les relie l'une à l'autre;
- le premier profilé comporte une portion avant qui fait saillie vers l'avant de la base du deuxième profilé, cette portion avant étant disposée sous ladite base du deuxième profilé; ces dispositions facilitent en particulier la fixation de la partie avant d'une coiffe qui recouvre le coussin d'assise, la partie avant de cette coiffe présentant en section verticale une forme de crosse qui pénètre sous la portion avant du premier profilé et cette partie avant de coiffe étant serrée sur la portion avant du premier profilé par plissage, et plus précisément par fronçage ou stringage;
- chaque pivot qui relie entre elles les branches latérales des profilés est également relié à une patte de support qui supporte l'armature d'assise et qui est prise en chape entre lesdites branches latérales des deux profilés ;
- la patte de support est une bielle articulée permettant un réglage en hauteur de l'armature d'assise.
- chacune des plaques de fixation est également montée sur une bielle articulée permettant un réglage en hauteur de l'armature assise;
- l'armature d'assise comporte en outre un mécanisme de blocage des bielles, ce mécanisme étant commandé au moyen d'une manette montée pivotante sur au moins l'un des deux pivots qui relient entre elles les branches latérales des profilés rigides;
- les branches latérales de profilé qui appartiennent à un même longeron latéral présentent une branche latérale inférieure comportant au moin un rebord inférieur sensiblement horizontal qui s'étend vers l'intérieur du cadre ; ces dispositions facilitent l'accrochage latéral de la coiffe du coussin d'assise sur l'armature d'assise.

L'invention a également pour objet un procédé de fabrication d'une armature d'assise telle que définie ci-dessus lorsque les branches latérales des profilés rigides sont reliés deux à deux par des pivots, ce procédé comportant les étapes suivantes :
a) placer les deux profilés dans une position voisine de la position qu'ils doivent occuper dans l'armature d'assise,
b) fixer deux à deux les branches latérales de ces profilés au moyen des pivots,
c) souder ensemble les deux profilés aux deux points de fixation avant,
d) et souder les extrémités arrière des deux profilés aux plaques de fixation.

Ce procédé permet un montage fiable de l'armature d'assise sans imposer des containtes trop importantes aux soudures, et ce même avec des tolérance relativement larges sur les dimensions des profilés.

L'étape a) peut éventuellement inclure le placement de deux pattes de support dans une position voisine de la position qu'elles doivent occuper dans l'armature d'assise, et l'étape b) peut alors inclure la prise en chape des deux pattes de support entre les branches latérales des deux profilés.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue schématique montrant un exemple de siège dont l'armature d'assise peut être réalisée selon l'invention,
- la figure 2 est une vue en perspective d'une armature d'assise réglable en hauteur selon une forme de réalisation de l'invention,
- les figures 3 et 4 sont ces vues de côté de l'armature d'assise de la figure 2, respectivement en position basse et en position haute,
- les figures 5 et 6 sont des vues en coupe respectivement selon les lignes V-V et VI-VI de la figure 3,
- et la figure 7 est une vue de côté d'une variante de l'armature d'assise des figures 2 à 6, sans possibilité de réglage en hauteur.

Sur les différentes figures, les mêmes références désignent des éléments identiques ou similaires.

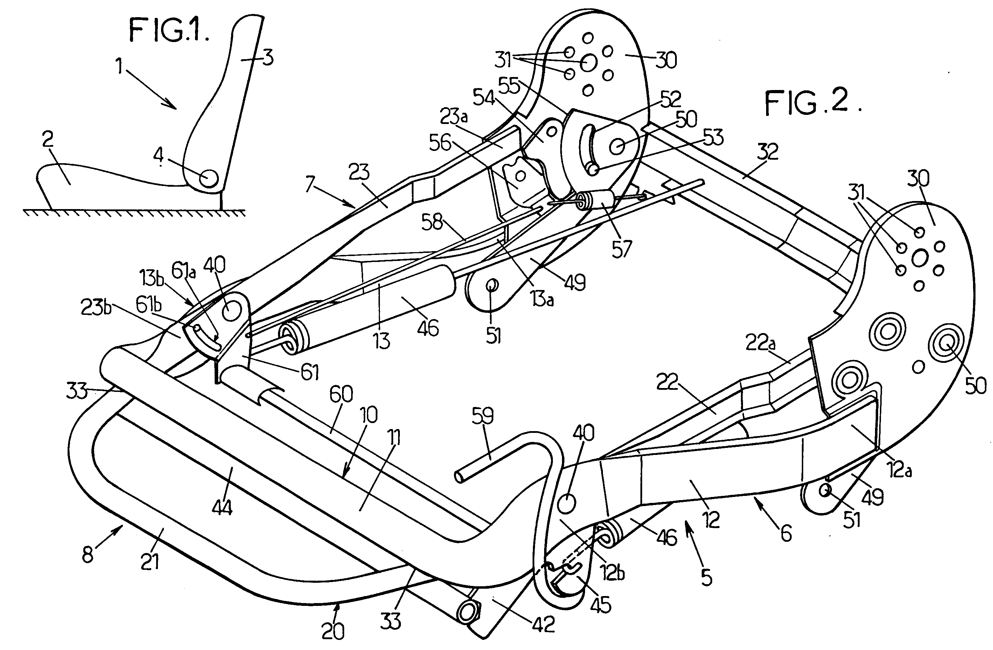

Comme représenté schématiquement sur la figure 1, l'invention concerne une armature pour l'assise 2 d'un siège 1 de véhicule notamment automobile, ce siège comportant un dossier 3 généralement relié à l'armature de l'assise par une articulation 4 qui permet de régler l'inclinaison du dossier 3.

Comme représenté sur la figure 2, l'armature de l'assise 2 du siège est constituée par un cadre 5 constitué en majeure partie par des profilés métalliques, ces profilés pouvant être tubulaires ou à section ouverte. Le cadre 5 supporte un coussin d'assise (non représenté), généralement par l'intermédiaire d'une nappe de fils métalliques ou d'un baquet en tôle.

Le cadre 5 comporte deux longerons latéraux 6 et 7 qui sont reliés entre eux à leurs extrémités avant par une traverse frontale 8 et dont les extrémités arrière sont prévues pour le montage de l'armature du dossier 3.

Selon l'invention, le cadre 5 comporte deux profilés métalliques 10 et 20 de dimensions voisines, qui présentent une forme générale en U.

Chacun de ces deux profilés 10 et 20 présentent une base, respectivement 11 et 21, disposée vers l'avant, et deux branches latérales, respectivement 12, 13 et 22, 23, qui s'étendent vers l'arrière à partir de la base jusqu'à des extrémités arrière, respectivement 12a, 13a et 22a, 23a.

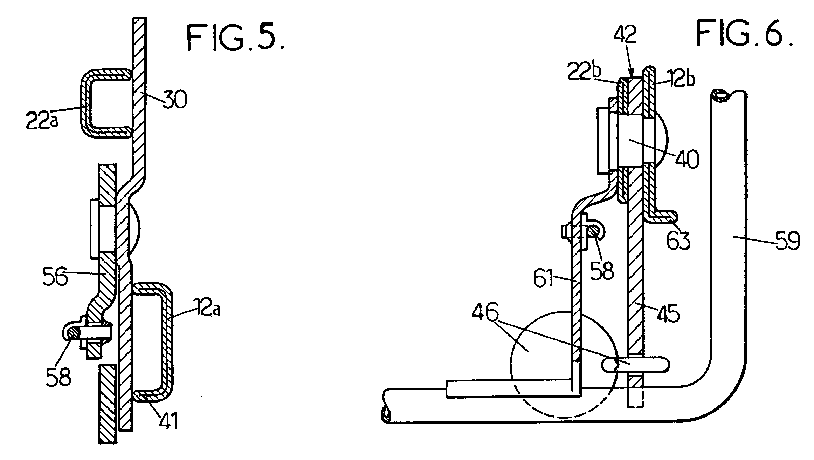

Dans l'exemple représenté sur les dessins, chacun des profilés 10 et 20 présente une forme tubulaire à section sensiblement circulaire au niveau de sa base, respectivement 11 et 21, puis ce profilé tubulaire présente une section écrasée au niveau des branches latérales respectivement 12, 13 et 22, 23, comme on peut le voir sur les figures 5 et 6.

Plus particulièrement, chacun les profilés 10 et 20 présente une zone de section aplatie verticalement, respectivement 12b, 13b et 22b, 23b, au voisinage de l'extrémité avant de chacune de ses branches latérales, puis les branches latérales se prolongent vers l'arrière avec une section sensiblement en U ouverte vers l'extérieur du cadre pour le profilé 20 et ouverte vers l'intérieur du cadre pour le profilé 10.

En se référant à nouveau à la figure 2, les bases 11 et 21 des deux profilés sont disposées sensiblement parallèlement l'une à l'autre pour former la traverse frontale 8 du cadre, et chaque longeron latéral 6 ou 7 comporte deux branches latérales, respectivement 12, 22 et 13, 23 appartenant respectivement aux deux profilés.

Ces deux branches latérales sont associées à une plaque de fixation 30 métallique qui est disposée verticalement et qui est soudée aux extrémités arrière, respectivement 12a, 22a et 13a, 23a desdites deux branches latérales.

Chacune des deux plaques de fixation 30 constitue ainsi l'extrémité arrière de l'un des longerons 6 et 7, et elle est en outre pourvue de trous de fixations 31 destinés au montage d'un mécanisme d'articulation (non représenté) qui supporte le dossier du siège.

Eventuellement les plaques de fixation 30 pourraient constituer des flasques latéraux appartenant à ces mécanismes d'articulation.

Les deux plaques de fixation 30 sont en outre reliées l'une à l'autre par une traverse arrière 32 constituée par un profilé métallique.

Dans l'exemple représenté sur les dessins, les branches latérales 22 et 23 du profilé 20 sont légèrement moins écartées l'une de l'autre que les branches latérales 12 et 13 du profilé 10, et les extrémités arrière 22a et 23a des branches latérales du profilé 20 sont soudées sur les faces intérieures des plaques de fixation 30, tandis que les extrémités arrières 12a et 13a des branches latérales du profilé 10 sont soudées sur les faces extérieures des plaques de fixation 30.

De plus, les extrémités arrière des branches latérales du profilé 20 sont disposées verticalement au dessus ces extrémités arrière des branches latérales du profilé 10.

A partir de leurs extrémités arrière, les branches latérales appartenant à un même longeron latéral convergent l'une vers l'autre en direction de l'avant. Ces deux branches latérales se croisent au niveau de leurs zones aplaties, respectivement 12b, 22b et 13b, 23b, et la partie avant du profilé 20 est disposée sous la partie avant du profilé 10.

Chaque longeron latéral 6 et 7 comporte un pivot 40 constitué par un rivet d'axe horizontal, qui relie entre elles les deux branches latérales, respectivement 12, 22 et 13, 23 appartenant à ce longeron latéral. Ces deux pivots 40 sont alignés selon un axe horizontal commun.

Par ailleurs, le profilé 20 s'étend vers l'avant jusqu'au delà de la base 11 du profilé 10, et les deux branches latérales 22 et 23 de ce profilé 20 croisent la base 11 du profilé 10. Les deux branches latérales 22 et 23 sont soudées en partie inférieure de la base 11 en deux points de fixation 33 situés respectivement aux croisements entre lesdites branches latérales 22, 23 et ladite base 11.

Les deux longerons latéraux 6 et 7 présentent ainsi une structure triangulée qui est particulièrement résistante.

La base 11 du profilé 10, qui est disposée relativement haute, permet d'éviter le "sous-marinage", c'est-à-dire le passage de l'usager du siège sous la ceinture de sécurité en cas de choc à l'avant du véhicule. Dans ce but, la section de la base 11 est de préférence supérieure à la section de la base 21.

Par ailleurs, la base 21 du profilé 20 permet l'accrochage de la partie avant d'une coiffe (non représentée) recouvrant le coussin de l'assise. Cette partie avant de la coiffe peut présenter une section verticale en forme de crosse qui s'engage sous la base 21 et la portion avant du profilé 20. Ladite partie avant de la coiffe est serrée sur la portion avant du profilé 20 par plissage, ou plus précisément par fronçage ou stringage.

De plus, les branches latérales 12 et 13 du profilé 10, qui constituent une portion inférieure de l'armature d'assise à l'arrière des pivots 40, permettent de fixer facilement les bords latéraux de la coiffe qui recouvre le coussin du siège.

Cette fixation peut être obtenue notamment par plissage du bord inférieur de la coiffe qui peut être serré autour du cadre 5 en passant sous les branches latérales 12 et 13, sans que ces branches latérales ne risquent de blesser la coiffe, grâce à la section en U ouverte vers l'intérieur desdites branches latérales 12 et 13.

En outre, comme on peut le voir sur la figure 6, les branches latérales 12 et 13 du profilé 10 peuvent comporter un rebord inférieur 63 dirigé vers l'extérieur du cadre 5 dans les zones aplaties 12b et 13b, afin de constituer une butée basse pour le bord inférieur de la coiffe de l'assise, pour éviter toute interférence entre cette coiffe et les bielles avant 42 qui vont être décrites ci-après.

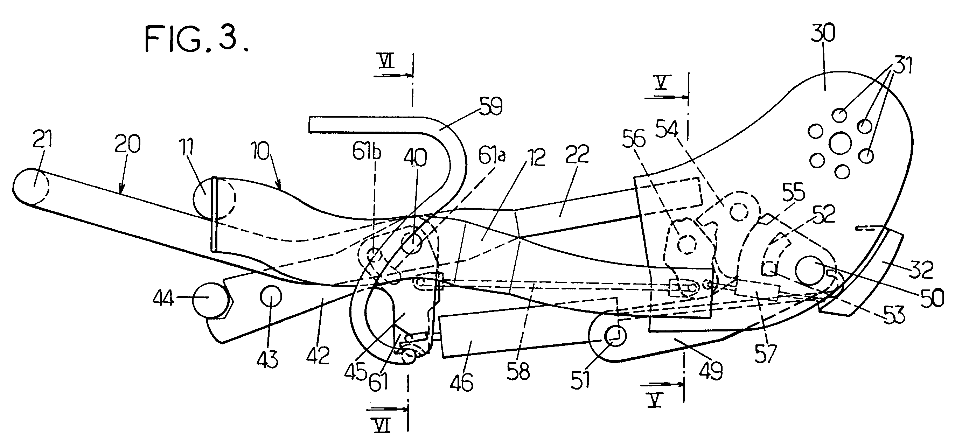

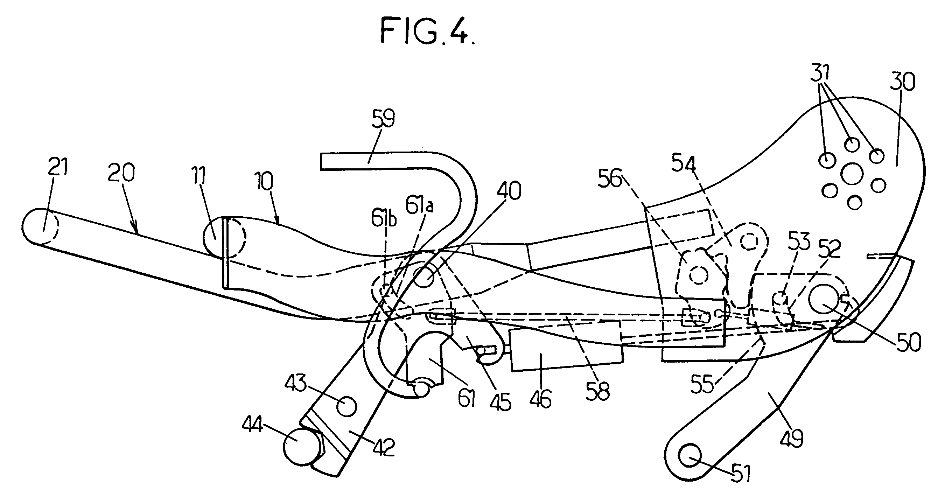

Par ailleurs, l'armature d'assise représentée sur les figures 2 à 6 comporte un mécanisme de réglage qui permet de faire varier la hauteur de l'assise du siège, comme représenté en particulier sur les figures 3 et 4.

Ce mécanisme de réglage comporte tout d'abord deux bielles avant 42, dont une seule est visible sur les dessins.

Ces deux bielles avant tourillonnent chacune sur un des pivots 40, et elles sont constituées par des plaques de tôle découpée disposées dans des plans verticaux parallèles, prises en chape entre les zones aplaties, respectivement 12b, 22b et 13b, 23b des branches latérales des profilés.

Chacune des deux bielles avant 42 est montée pivotante autour d'un axe horizontal 43, généralement solidaire d'une glissière (non représentée) qui permet de régler la position longitudinale de l'assise du siège.

De plus, les deux bielles avant 42 sont reliées entre elles par un tube rigide 44 ou une autre pièce rigide, de façon que les mouvements de ces deux bielles soient parfaitement synchronisés.

Enfin, chaque bielle avant 42 comporte un bras de levier 45 relié à une extrémité d'un ressort hélicoïdal 46 dont l'autre extrémité est fixée à la traverse arrière 32, de façon à solliciter élastiquement les bielles avant 42 vers une position relevée, qui correspond à une position haute de l'assise du siège (voir figure 4) : on facilite ainsi le réglage de la hauteur de l'assise par une personne assise sur le siège.

Le mécanisme de réglage en hauteur comporte en outre deux bielles arrière 49 en tôle découpée sur lesquelles sont montées les deux plaques de fixation 30, au moyen de pivots 50.

Les bielles arrière 49 sont montées pivotantes sur des axes 51 qui sont solidaires des mêmes glissières que les axes 43 des bielles avant.

Les bielles arrière 49 pourraient éventuellement être reliées entre elles par un tube rigide similaire au tube 44 aux fins de synchronisation, auquel cas le tube 44 des bielles avant 42 pourrait, le cas échéant, être supprimé.

Chaque bielle arrière 49 comporte une lumière oblongue 52 qui présente une forme d'arc de cercle centrée sur le pivot 50 de la bielle arrière, un pion 53 solidaire de la plaque de fixation 30 correspondante pénétrant dans cette lumière pour limiter le débattement angulaire de la bielle arrière.

Chaque bielle arrière 49, ou de façon plus générale au moins l'une des bielles 42 et 49 est équipée d'un mécanisme de blocage.

Lorsque ce mécanisme est prévu sur une bielle 49, il comporte un verrou denté 54 coopérant avec un secteur denté 55 qui appartient à la bielle 49 et qui est centré sur le pivot 50 de cette bielle.

Le verrou 54 est monté pivotant sur la plaque de fixation 30 correspondant à la bielle 49, et il est déplaçable entre une position de blocage où il immobilise cette bielle 49, et une position effacée où il permet le pivotement de ladite bielle 49.

Une came 56 qui est également montée pivotante sur la plaque de fixation 30, est sollicitée élastiquement par un ressort 57 pour placer le verrou 54 dans sa position de blocage, et cette came 56 peut être écartée du verrou 54 en permettant à ce verrou de se placer dans sa position effacée.

Cet actionnement de la came 56 est obtenu au moyen d'une tringle 58 actionnée par une manette 59 qui de préférence est fixée à une plaque de tôle 61 tourillonnant sur l'un des pivots 40 susmentionnés.

Lorsque les deux bielles arrière 49 sont dotées d'un mécanisme de blocage, comme représenté sur la figure 2, les tringles de commande 58 de ces deux mécanismes sont reliées entre elles par une tige rigide 60 qui permet de synchroniser la commande des deux mécanismes de blocage, cette tige 60 s'étendant entre la plaque de tôle 61 susmentionnée qui tourillonne sur un pivot 40 et une plaque de tôle 61 similaire qui tourillonne sur l'autre pivot 40.

Chaque plaque 61 comporte en outre une lumière oblongue 61a formée en arc de cercle et centrée sur le pivot 40 correspondant, l'un des deux profilés 10 et 20 étant solidaire d'un pion 61b qui pénètre dans cette lumière oblongue en vue de limiter le débattement angulaire de la plaque 61.

Le montage de l'armature d'assise qui vient d'être décrite est relativement simple.

Ce montage comporte tout d'abord une étape préliminaire qui consiste à disposer les deux profilés 10 et 20, les bielles avant 42 et les deux plaques de fixation 30 déjà équipées de leur mécanisme de blocage dans un support de montage que l'on appelle "drageoir".

Les deux profilés étant alors disposés dans une position voisine de la position qu'ils doivent occuper dans l'armature d'assise, on fixe deux à deux leurs branches latérales en rivetant les pivots 40 sur ces branches latérales ainsi que sur les bielles avant 42 et sur les plaques 61 appartenant à la commande du mécanisme de blocage.

Après cette première fixation, les profilés 10 et 20 peuvent encore pivoter librement l'un par rapport à l'autre et les burelles avant 42 sont prises en chape entre les deux profilés 10 et 20.

On applique alors la base 11 du profilé 10 contre les deux branches latérales 22 et 23 du profilé 20 en faisant pivoter les deux profilés autour des pivots 40, puis on réalise les points de fixation 33 par soudure, et de préférence par soudure par résistance.

Les deux profilés 10 et 20 sont alors fixés l'un par rapport à l'autre.

On fixe ensuite les extrémités arrière, respectivement 12a, 13a et 22a, 23a des deux profilés sur les deux plaques de fixation 30 par soudure, et de préférence par soudure par résistance.

Le procédé de fabrication qui vient d'être décrit permet (le minimiser les contraintes qui peuvent être imposées aux soudures du fait de l'assemblage des profilés 10 et 20, ce qui tend à augmenter la résistance et la fiabilité de l'armature d'assise tout en permettant des tolérances plus larges sur les dimensions des profilés 10 et 20.

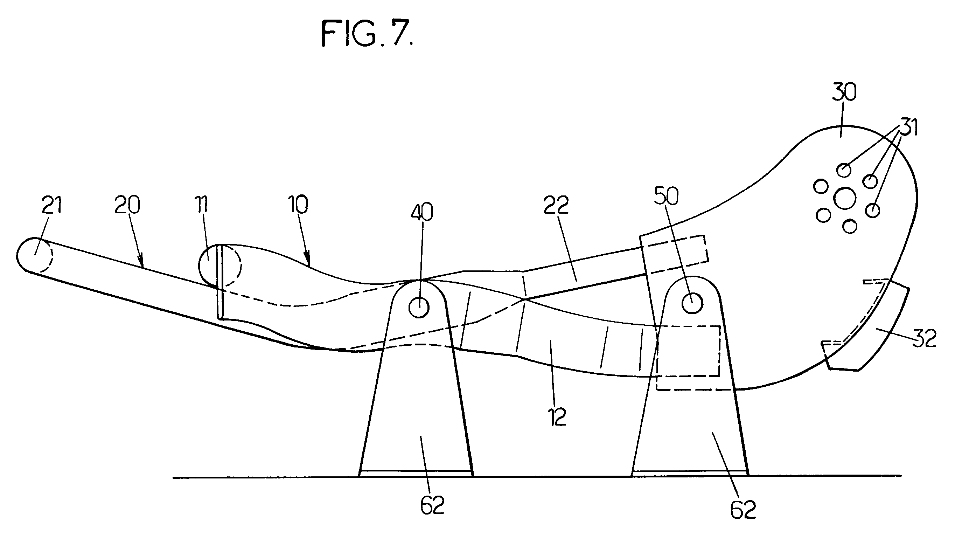

En variante, comme représenté sur la figure 7, les bielles avant 42 et les bielles arrière 47 pourraient être remplacées par des pattes de support 62 non rotatives, ces pattes de support 62 étant solidaires des glissières qui permettent le réglage de la position longitudinale de l'assise du siège, et l'armature d'assise demeurant par ailleurs inchangée.

Dans la variante de la figure 7, les pattes 62 peuvent être montées sur les profilés 10 et 20 et sur les plaques de fixation 30 par les pivots 40 et 50 mentionnés ci-dessus.

La liaison entre les plaques de fixation 30 et les pattes de support 62 disposées vers l'arrière pourrait toutefois être une liaison par soudure au lieu d'être une liaison par pivot.

Eventuellement, les pattes de support 62 disposées vers l'avant pourraient également être fixées au profilé 10 et 20 par soudure, bien que ce mode de fixation ne soit pas préféré dans le cadre de la présente invention.

## Revendications

1. Armature d'assise pour un siège de véhicule (1) qui présente une assise (2) et un dossier (3), cette armature comportant un cadre (5) en profilés qui inclut deux longerons latéraux (6, 7) s'étendant chacun entre une extrémité arrière et une extrémité avant, les extrémités arrière respectives des deux longerons latéraux étant destinées au montage du dossier du siège et les extrémités avant respectives de ces longerons étant reliées entre elles par une traverse frontale (8),
**caractérisée en ce que** le cadre de l'armature comporte deux profilés rigides (10, 20) de dimensions voisines qui présentent une forme générale en U, avec une base (11, 21) disposée vers l'avant et deux branches latérales (12, 13, 22, 23) qui s'étendent vers l'arrière à partir de la base jusqu'à des extrémités arrière (12a, 13a, 22a, 23a), les bases (11, 21) respectives des deux profilés étant disposées sensiblement parallèlement l'une à l'autre pour former la traverse frontale (8) du cadre, chaque longeron latéral (6, 7) étant formé par deux branches latérales (12, 22, 13, 23) appartenant respectivement aux deux profilés, associées à une plaque de fixation rigide (30) verticale, les extrémités arrière de ces deux branches latérales étant écartées l'une de l'autre verticalement et étant fixées à ladite plaque de fixation, et les deux profilés (10, 20) étant fixés rigidement l'un à l'autre en deux points de fixation avant (33), situés respectivement au voisinage de chaque longeron latéral et vers l'avant du cadre.

2. Armature d'assise selon la revendication 1, dans laquelle les deux profilés rigides (10, 20) sont fixés l'un à l'autre par soudure aux deux points de fixation avant (33), les extrémités arrière (12a, 13a, 22a, 23a) des deux profilés étant également fixées par soudure aux deux plaques de fixation (30), chaque longeron latéral (6, 7) comportant un pivot (40) horizontal qui relie entre elles les deux branches latérales (12, 22, 13, 23) appartenant à ce longeron latéral, ce pivot étant disposé entre, d'une part, le point de fixation avant (33) situé au voisinage dudit longeron latéral et, d'autre part, les extrémités arrière (12a, 22a, 13a, 23a) desdites deux branches latérales, et les deux pivots (40) correspondant aux deux longerons latéraux étant alignés selon un axe commun.

3. Armature d'assise selon la revendication 2, dans laquelle les deux branches latérales de l'un (20) des deux profilés rigides, dit premier profilé, sont légèrement moins écartées l'une de l'autre que les deux branches latérales de l'autre (10) des deux profilés rigides, dit deuxième profilé, les deux branches latérales du premier profilé s'étendant vers l'avant au-delà de la base du deuxième profilé (10), et les deux points de fixation avant (33) étant constitués chacun par un point de contact entre une branche latérale (22, 23) du premier profilé et la base (11) du deuxième profilé.

4. Armature d'assise selon la revendication 3, dans laquelle les deux branches latérales (12, 22, 13, 23) de profilé qui appartiennent à un même longeron latéral se croisent verticalement au niveau du pivot (40) qui les relie l'une à l'autre.

5. Armature d'assise selon l'une quelconque des revendications 3 et 4, dans lequel le premier profilé (20) comporte une portion avant qui fait saillie vers l'avant de la base (11) du deuxième profilé, cette portion avant étant disposée sous ladite base du deuxième profilé.

6. Armature d'assise selon l'une quelconque des revendications 2 à 5, dans laquelle chaque pivot (40) qui relie entre elles les branches latérales des profilés est également relié à une patte de support (42, 62) qui supporte l'armature d'assise et qui est prise en chape entre lesdites branches latérales des deux profilés 10, 20).

7. Armature d'assise selon la revendication 6, dans laquelle la patte de support est une bielle articulée (42) permettant un réglage en hauteur de l'armature d'assise.

8. Armature d'assise selon la revendication 7, dans laquelle chacune des plaques de fixation (30) est également montée sur une bielle articulée (49) permettant un réglage en hauteur de l'armature assise.

9. Armature d'assise selon l'une quelconque des revendications 7 et 8, comportant en outre un mécanisme de blocage des bielles (54, 55, 56), ce mécanisme étant commandé au moyen d'une manette (59) montée pivotante sur au moins l'un des deux pivots (40) qui relient entre elles les branches latérales des profilés rigides.

10. Armature d'assise selon l'une quelconque des revendications précédentes, dans laquelle les branches latérales de profilé qui appartiennent à un même longeron (6, 7) latéral présentent une branche latérale inférieure (12, 13) comportant au moins un rebord inférieur (41) sensiblement horizontal qui s'étend vers l'intérieur du cadre.

11. Procédé de fabrication d'une armature d'assise selon la revendication 2, ce procédé comportant les étapes suivantes :
a) placer les deux profilés (10, 20) dans une position voisine de la position qu'ils doivent occuper dans l'armature d'assise,
b) fixer deux à deux les branches latérales (12, 22, 13, 23) de ces profilés au moyen des pivots (40),
c) souder ensemble les deux profilés (10, 20) aux deux points de fixation avant (33),
d) et souder les extrémités arrière (12a, 13a, 22a, 23a) des deux profilés aux plaques de fixation (30).

12. Procédé de fabrication d'une armature d'assise selon la revendication 6, ce procédé comportant les étapes suivantes :
a) placer les deux profilés (10, 20) et deux pattes de support (42, 62) dans une position voisine de la position qu'ils doivent occuper dans l'armature d'assise,
b) fixer deux à deux les branches latérales (12, 22, 13, 23) de ces profilés au moyen des pivots (40), en prenant en chape les deux pattes de support (42, 62) entre les branches latérales des deux profilés,
c) souder ensemble les deux profilés (10, 20) aux deux points de fixation avant (33),
d) et souder les extrémités arrière (12a, 13a, 22a, 23a) des deux profilés aux plaques de fixation (30).

## Claims

1. Seat base framework for a vehicle seat (1) which has a seat base (2) and a backrest (3), this framework including a frame (5) made of section pieces which includes two lateral longitudinal members (6, 7) each one extending between a rear end and a front end, the respective rear ends of the two lateral longitudinal members being intended for the mounting of the backrest of the seat and the respective front ends of these longitudinal members being joined together by a front cross member (8),
**characterized in that** the frame of the framework includes two rigid section pieces (10, 20) of similar dimensions which have an overall U shape, with a base (11, 21) arranged towards the front and two lateral branches (12, 13, 22, 23) which extend backwards from the base as far as rear ends (12a, 13a, 22a, 23a), the respective bases (11, 21) of the two section pieces being arranged substantially parallel to one another to form the front cross member (8) of the frame, each lateral longitudinal member (6, 7) being formed by two lateral branches (12, 22, 13, 23) belonging respectively to the two section pieces, associated with a vertical rigid fastening plate (30), the rear ends of these two lateral branches being separated from one another vertically and being fastened to the said fastening plate, and the two section pieces (10, 20) being fastened rigidly to one another at two front fastening points (33) situated respectively close to each lateral longitudinal member and towards the front of the frame.

2. Seat base framework according to Claim 1, in which the two rigid section pieces (10, 20) are fastened together by welding at the two front fastening points (33), the rear ends (12a, 13a, 22a, 23a) of the two section pieces also being fastened by welding to the two fastening plates (30), each lateral longitudinal member (6, 7) including a horizontal pivot (40) which joins together the two lateral branches (12, 22, 13, 23) belonging to this lateral longitudinal member, this pivot being arranged between, on the one hand, the front fastening point (33) situated close to the said lateral longitudinal member and, on the other hand, the rear ends (12a, 22a, 13a, 23a) of the said two lateral branches, and the two pivots (40) corresponding to the two lateral longitudinal members being aligned on a common axis.

3. Seat base framework according to Claim 2, in which the two lateral branches of one (20) of the two rigid section pieces, known as the first section piece, are separated from each other slightly less than the two lateral branches of the other (10) of the two rigid section pieces, known as the second section piece, the two lateral branches of the first section piece extending forwards beyond the base of the second section piece (10), and the two front fastening points (33) each consisting of a point of contact between one lateral branch (22, 23) of the first section piece and the base (11) of the second section piece.

4. Seat base framework according to Claim 3, in which the two lateral branches (12, 22, 13, 23) of the section piece which belong to the same lateral longitudinal member intersect vertically at the pivot (40) which joins them together.

5. Seat base framework according to either of Claims 3 and 4, in which the first section piece (20) includes a front portion which projects forwards from the base (11) of the second section piece, this front portion being arranged under the said base of the second section piece.

6. Seat base framework according to any one of Claims 2 to 5, in which each pivot (40) which joins together the lateral branches of the section pieces is also joined to a support leg (42, 62) which supports the seat base framework and is mounted in the manner of a fork joint between the said lateral branches of the two section pieces (10, 20).

7. Seat base framework according to Claim 6, in which the support leg is an articulated link (42) allowing height adjustment of the seat base framework.

8. Seat base framework according to Claim 7, in which each of the fastening pates (30) is also mounted on an articulated link (49) allowing height adjustment of the seat base framework.

9. Seat base framework according to either of Claims 7 and 8, further including a mechanism (54, 55, 56) for immobilizing the links, this mechanism being controlled by means of a handle (59) mounted so that it can pivot on at least one of the two pivots (40) which join together the lateral branches of the rigid section pieces.

10. Seat base framework according to any one of the preceding claims, in which the lateral branches of the section piece which belong to the same lateral longitudinal member (6, 7) exhibit a lower lateral branch (12, 13) including at least one substantially horizontal lower rim (41) which extends towards the inside of the frame.

11. Method for manufacturing a seat base framework according to Claim 2, this method including the following steps:
a) placing the two section pieces (10, 20) in a position close to the position which they are to occupy in the seat base framework,
b) fastening the lateral branches (12, 22, 13, 23) of these section pieces together in pairs by means of the pivots (40),
c) welding the two section pieces (10, 20) together at the two front fastening points (33),
d) and welding the rear ends (12a, 13a, 22a, 23a) of the two section pieces to the fastening plates (30).

12. Method for manufacturing a seat base framework according to Claim 6, this method including the following steps:
a) placing the two section pieces (10, 20) and two support legs (42, 62) in a position close to the position which they are to occupy in the seat base framework,
b) fastening the lateral branches (12, 22, 13, 23) of these section pieces together in pairs by means of the pivots (40), mounting the two support legs (42, 62) in the manner of a fork joint between the lateral branches of the two section pieces,
c) welding the two section pieces (10, 20) together at the two front fastening points (33),
d) and welding the rear ends (12a, 13a, 22a, 23a) of the two section pieces to the fastening plates (30).

## Patentansprüche

1. Sitzflächengestell für einen Autositz (1), der eine Sitzfläche (8) und eine Rückenlehne (3) umfaßt, wobei dieses Gestell einen Rahmen (5) aus Profilen umfaßt, der zwei seitliche Längsträger (6, 7) einschließt, die sich jeweils zwischen einem hinteren und einem vorderen Ende erstrecken, wobei die jeweiligen hinteren Enden der beiden seitlichen Längsträger für die Befestigung der Rückenlehne des Sitzes bestimmt sind und die jeweiligen vorderen Enden dieser Längsträger durch einen stirnseitigen Querträger (8) miteinander verbunden sind,
dadurch gekennzeichnet, daß der Rahmen des Gestells zwei starre Profile (10, 20) ähnlicher Abmessungen aufweist, die insgesamt U-förmig sind und einen Querteil (11, 21) aufweisen, der nach vorne hin angeordnet ist, sowie zwei Seitenarme (12, 13, 22, 23), die sich von dem Querteil aus nach hinten bis zu hinteren Enden (12a, 13a, 22a, 23a) erstrecken, wobei die jeweiligen Querteile (11, 21) der beiden Profile im wesentlichen parallel zueinander angeordnet sind, um den stirnseitigen Querträger (8) des Rahmens zu bilden, jeder seitliche Längsträger (6, 7) von zwei Seitenarmen (12, 22, 13, 23) gebildet wird, die jeweils zu den beiden Profilen gehören und mit einer starren, vertikalen Befestigungsplatte (30) verbunden sind, wobei die hinteren Enden dieser beiden Seitenarme vertikal voneinander beabstandet und an der Befestigungsplatte befestigt sind, und wobei die beiden Profile (10, 20) starr an zwei vorderen Befestigungspunkten (33), die jeweils nahe jedes seitlichen Längsträgers und zum vorderen Teil des Rahmens hin angeordnet sind, aneinander befestigt sind.

2. Sitzflächengestell nach Anspruch 1, bei dem die beiden starren Profile (10, 20) durch Schweißen an den beiden vorderen Befestigungspunkten (33) aneinander befestigt sind, wobei die hinteren Enden (12a, 13a, 22a, 23a) der beiden Profile ebenfalls an die beiden Befestigungsplatten (30) geschweißt sind, wobei jeder seitliche Längsträger (6, 7) einen horizontalen Zapfen (40) umfaßt, der die beiden Seitenarme (12, 22, 13, 23), die zu diesem seitlichen Längsträger gehören, miteinander verbindet, wobei dieser Zapfen zwischen einerseits dem vorderen Befestigungspunkt (33), der nahe dem seitlichen Längsträger gelegen ist, und andererseits den hinteren Enden (12a, 22a, 13a, 23a) der beiden Seitenarme angeordnet ist und die beiden Zapfen (40), die den beiden seitlichen Längsträgern entsprechen, nach einer gemeinsamen Achse ausgerichtet sind.

3. Sitzflächengestell nach Anspruch 2, bei dem die beiden Seitenarme des einen (20) der beiden starren Profile, das erstes Profil genannt wird, geringfügig weniger voneinander beabstandet sind als die beiden Seitenarme des anderen (10) der beiden starren Profile, das zweites Profil genannt wird, wobei sich die beiden Seitenarme des ersten Profils nach vorne hin über den Querteil des zweiten Profils (10) hinaus erstrecken und die beiden vorderen Befestigungspunkte (33) jeweils von einem Kontaktpunkt zwischen einem Seitenarm (22, 23) des ersten Profils und dem Querteil (11) des zweiten Profils gebildet werden.

4. Sitzflächengestell nach Anspruch 3, bei dem die beiden Profilseitenarme (12, 22, 13, 23), die zu ein und demselben seitlichen Längsträger gehören, sich in Höhe des Zapfens (40), der sie miteinander verbindet, vertikal kreuzen.

5. Sitzflächengestell nach einem der Ansprüche 3 und 4, bei dem das erste Profil (20) einen vorderen Bereich umfaßt, der nach vorne über den Querteil (11) des zweiten Profils übersteht, wobei dieser vordere Bereich unter dem Querteil des zweiten Profils angeordnet ist.

6. Sitzflächengestell nach einem der Ansprüche 2 bis 5, bei dem jeder Zapfen (40), der die Seitenarme der Profile miteinander verbindet, auch mit einem Stützarm (42, 62) verbunden ist, welcher das Sitzflächengestell stützt und zwischen den Seitenarmen der beiden Profile (10, 20) überdeckt ist.

7. Sitzflächengestell nach Anspruch 6, bei dem der Stützarm eine angelenkte Kurbelstange (42) ist, die eine Höhenverstellung des Sitzflächengestells ermöglicht.

8. Sitzflächengestell nach Anspruch 7, bei dem jede Befestigungsplatte (30) auch an eine Kurbelstange (49) montiert ist, die eine Höhenverstellung des Sitzflächengestells ermöglicht.

9. Sitzflächengestell nach einem der Ansprüche 7 und 8, das außerdem einen Mechanismus zum Blockieren der Kurbelstangen (54, 55, 56) umfaßt, wobei dieser Mechanismus mit einem Bedienungshebel (59) gesteuert wird, der schwenkbar an mindestens einem der beiden Zapfen (40) montiert ist, welche die Seitenarme der starren Profile miteinander verbinden.

10. Sitzflächengestell nach einem der vorstehenden Ansprüche, bei dem die Profilseitenarme, die zu ein und demselben seitlichen Längstrager (6, 7) gehören, einen unteren Seitenarm (12, 13) aufweisen, der mindestens eine untere Randleiste (41) umfaßt, die im wesentlichen horizontal ist und sich zum Inneren des Rahmens hin erstreckt.

11. Verfahren zur Herstellung eines Sitzflächengestells nach Anspruch 2, wobei dieses Verfahren folgende Schritte umfaßt:
a) Anordnen der beiden Profile (10, 20) in einer Position, die ähnlich derjenigen ist, die sie in dem Sitzflächengestell einnehmen sollen,
b) paarweise Befestigung der Seitenarme (12, 22, 13, 23) dieser Profile mittels Zapfen (40),
c) Verschweißen der beiden Profile (10, 20) an den beiden vorderen Befestigungspunkten (33),
d) und Schweißen der hinteren Enden (12a, 13a, 22a, 23a) der beiden Profile an die Befestigungsplatten (30).

12. Verfahren zur Herstellung eines Sitzflächengestells nach Anspruch 6, wobei dieses Verfahren folgende Schritte umfaßt:
a) Anordnen der beiden Profile (10, 20) und zweier Stützarme (42, 62) in einer Position, die ähnlich derjenigen ist, die sie in dem Sitzflächengestell einnehmen sollen,
b) paarweise Befestigung der Seitenarme (12, 22, 13, 23) dieser Profile mittels Zapfen (40), durch Überdeckung der beiden Stützarme (42, 62) zwischen den Seitenarmen der beiden Profile,
c) Verschweißen der beiden Profile (10, 20) an den beiden vorderen Befestigungspunkten (33),
d) und Schweißen der hinteren Enden (12a, 13a, 22a, 23a) der beiden Profile an die Befestigungsplatten (30).
